# EUROPEAN PATENT SPECIFICATION

(11) **EP 1 004 230 B1**
(45) Date of publication and mention of the grant of the patent: **23.08.2006**
(21) Application number: 99203925.5
(22) Date of filing: 23.11.1999
(51) Int. Cl.: A01B 63/00, A01B 71/02, H04B 1/034

(54) **Control of an agricultural vehicle**
Steuerung einer landwirtschaftlichen Maschine
Controle pour machine agricole

(30) Priority: 28.11.1998 GB 9825993
(43) Date of publication of application: 31.05.2000
(73) Proprietor: CNH U.K. LIMITED, Basildon, Essex SS14 3AD (GB)
(72) Inventor: Yorwarth, Graeme J., Canvey Island, Essex, SS8 9NJ (GB)
(74) Representative: Vandenbroucke, Alberic

(56) References cited:
- EP-A- 0 206 923
- DE-A- 3 914 483
- DE-A- 19 511 305
- US-A- 5 711 139

## Description

The present invention relates to the control of the functions of an agricultural vehicle, such as a tractor, and/or any implements carried or pulled by the vehicle.

Currently, all the controls of a tractor are mounted in the operator's cab. However, from the cab, the operator cannot see sufficiently well to control certain functions, such as the setting of the position of the hydraulic power lift, and to overcome this problem it is sometimes necessary for another person to stand outside the vehicle to give the operator appropriate instructions.

It is known to place electrical switches or mechanical levers on or adjacent to the rear tractor fender but these solutions only place the operator in a fixed and mostly dangerous position close to the hydraulic power lift, the power take-off shaft and the driven implement.

It is also known from EP-A-0.206.923 to employ a remote control box for controlling certain functions of a forest tractor. The box is carried by an operator on a waist belt, requiring the operator to control the switches and knobs from the side, more on touch than on vision. As such, only a limited number of simple to operate control elements can be provided on the box.

It is therefore an object of the present invention to mitigate the foregoing problems and to allow a single operator to control a variety of functions of an agricultural vehicle with improved efficiency and safety.

In accordance with the present invention, there is provided an agricultural vehicle having a remote control panel which is movable relative to the vehicle for enabling at least one of the functions of the vehicle and/or an associated implement to be controlled by an operator situated at a location remote from the vehicle.

The vehicle is characterized in that the remote control panel is shaped to resemble an artist's pallet, with a thumb hole to allow the panel to be held securely in one hand while the controls on the panel are operated with the other hand.

Preferably, a docking station is provided in the vehicle cab to receive the remote control panel to allow the same control panel to be used by the operator from within the cab as well as from a remote location.

In order to prevent accidental operation of the control of the vehicle, a dead man's switch may be provided on the remote control panel that is operated only when the control panel is securely held with the operator's thumb in the thumb hole. Such a switch may be used to switch off the engine of the agricultural vehicle, it being possible to re-start the engine only after the remote control panel has been reset following completion of the necessary adjustment of the controlled functions.

In the case of a tractor, the remote control panel may conveniently include controls for a hydraulic power lift for setting the position of an implement driven by the tractor.

To safeguard the operator from danger, it is preferred to provide means on the vehicle for determining the position of the operator in relation to the vehicle and means for disabling the remote control panel, or switching off the vehicle engine, if the operator moves too close to the vehicle.

Such sensing of the position of the operator may be performed by known passive techniques, such as by using a passive infra red detector, a capacitative sensor or an acoustic sensor.

Alternatively, the remote control panel may include a transponder co-operating with transmitters on board the vehicle, to allow the position of the operator to be determined by triangulation using known radar techniques.

The remote control panel may communicate with the vehicle using a wired cable or a wireless communication link. In the latter case, the communication link may for example be an infra red or a radio link.

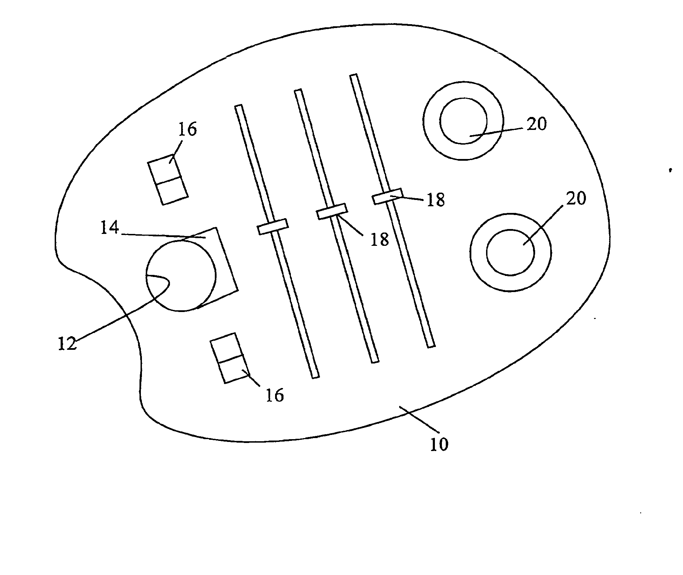

The invention will now be described further, by way of example, with reference to the accompanying drawing in which the single figure shows a remote control panel of the invention.

In the drawing, there is shown a remote control panel 10 that is ergonomically designed to be held firmly in one hand and resemble an artist's pallet. In this respect, the periphery of the panel defines a curved hand recess and a thumb hole 12 is formed near this recess. A dead man's switch 14 defines part of the periphery of the thumb hole 14 and is closed automatically when the panel is held firmly in an operator's hand. Controls for various functions of an agricultural vehicle are mounted on the remote control panel 10, which controls may take any known form such as rocker switches 16, variable slider controls 18 and rotary control knobs 20. In addition, a display screen (not shown) equally may be provided.

The remote control panel 10 communicates with the agricultural vehicle using a preferably wireless communication link to communicate the positions of the various controls on the remote control panel to control circuitry on the vehicle.

The remote control panel can be used from outside the vehicle to perform any desired task normally carried out from within the operator's cab, such as positioning of the hydraulic power lift, operating the power take-off shaft, setting the engine speed, controlling functions of an implement, etc. While such a control may be used in addition to a similar such control within the cab, it is preferred to provide a docking station in the cab so that the same controls on the control panel can be used by the operator from within the cab. This avoids unnecessary duplication. If desired, the docking station may include an electrical socket establishing a direct connection between the vehicle circuitry and the controls of the remote control panel, allowing the controls to function even if the wireless communication link should fail. A suitable position for the docking station in a conventional cab would be adjacent the powershift lever.

The purpose of the dead man's switch 14 is to ensure that none of the controls can be operated accidentally when the remote control panel is removed from the docking station. As soon as the switch 14 returns to an open position because of the release of the remote control panel, either the engine is stopped without having the possibility to restart it until the remote control panel has been reset, or the remote control panel is made inoperative e.g. by disconnecting the power source inside the pallet 10.

To avoid danger to the operator, it is desirable to sense the position of the operator, or the remote control panel and to switch off the engine or disable the remote control panel if the operator is too close to the vehicle. The preferred method of sensing the position of the operator carrying the remote control panel is to set up an e.m.f. field surrounding the agricultural vehicle and sense any disturbance in the field as a result of the proximity of the operator. Such detection of the proximity of the operator can be used to switch off the engine or immobilise the remote control panel to avoid injury to the operator. The same field also could sense the approach of livestock, and react accordingly.

A further manually or automatically operated switch (not shown) on the panel 10 could indicate whether the operator is left or right handed and change the orientation of the display screen and eventually reverse the operation of certain switches and slider controls on the panel 10 to accommodate the difference.

The described remote control panel offers, inter alia, the following advantages over prior controls.
- The panel can replace most of the current vehicle controls on the console of the cab, thereby increasing the space within the cab significantly and reducing the number of components. This results in cost savings as well increasing the functionality and value of the vehicle.
- The flexibility of the ergonomic design of the control panel of the preferred embodiment of the invention provides an improved operator interface which can be fitted to the B pillar of the vehicle, to the operator's seat or hand held.
- The remote control panel allows functions that normally require the presence of a second person to guide the operator, but now can be performed single handed with resultant improvement in efficiency, speed and safety. Indeed the remote control panel may permit tasks to be performed that are currently impossible.
- Lastly, the flexibility of the design facilitates operation by left-handed operators and operators with restricted mobility.

## Claims

1. An agricultural vehicle having a remote control panel (10) which is movable relative to the vehicle for enabling at least one of the functions of the vehicle and/or an associated implement to be controlled by an operator situated at a location remote from the vehicle; and
**characterized in that** the remote control panel (10) is shaped to resemble an artist's pallet, with a thumb hole (12) to allow the panel to be held securely in one hand while the controls (16, 18, 20) on the panel (10) are operated with the other hand.

2. An agricultural vehicle according to claim 1, **characterized in that** a docking station is provided in the vehicle cab to receive the remote control panel (10), so as to allow the same control panel (10) to be used by an operator both from within the cab and from a remote location.

3. An agricultural vehicle according to claim 2, **characterized in that** the functions of the movable control panel (10) are not duplicated on a fixed control panel in the vehicle cab.

4. An agricultural vehicle according to any of the preceding claims, **characterized in that** a dead man's switch (14) is provided on the remote control panel (10) that is operated only when the control panel (10) is securely held with the operator's thumb in the thumb hole (12).

5. An agricultural vehicle according to claim 4, **characterized in that** the dead man's switch (14) is operative either to switch off the engine of the agricultural vehicle when not closed by an operator's hand or to disable the function of the panel (10).

6. An agricultural vehicle according to any of the preceding claims, **characterized in that** the panel (10) comprises means to determine whether the operator is left or right handed.

7. An agricultural vehicle according to claim 6, **characterized in that** the panel (10) comprises a display screen, the orientation of which is changed depending on the operator being left or right handed.

8. An agricultural vehicle according to any of the preceding claims, **characterized in that** the remote control panel (10) includes a control for a hydraulic power lift serving to set the position of an implement driven by the vehicle.

9. An agricultural vehicle according to any of the preceding claims, **characterized in that** it further comprises means on the vehicle for determining the position of the operator and/or livestock in relation to the vehicle and means for disabling the remote control panel, or switching off the vehicle engine, if the operator moves too close to the vehicle.

10. An agricultural vehicle according to claim 9, **characterized in that** the means for determining the position of the operator include a passive infra red detector, a capacitative sensor or an acoustic sensor.

11. An agricultural vehicle according to claim 9, **characterized in that** the means for determining the position of the operator include a transponder co-operating with transmitters on board the vehicle, to allow the position of the operator to be determined by triangulation.

12. An agricultural vehicle according to any of the preceding claims, **characterized in that** the remote control panel (10) communicates with the vehicle using a radio or infra red communication link.

## Patentansprüche

1. Landwirtschaftliches Fahrzeug mit einem Fernbedienfeld (10), das gegenüber dem Fahrzeug beweglich ist, um die Steuerung zumindest einer der Funktionen des Fahrzeuges und/oder eines zugehörigen Arbeitsgerätes durch einen Fahrer zu ermöglichen, der sich an einer von dem Fahrzeug entfernten Stelle befindet, und
**dadurch gekennzeichnet, dass** das Fernbedienfeld (10) so geformt ist, dass es einer Künstlerpalette mit einer Daumenöffnung (12) ähnelt, um das sichere Halten des Bedienfeldes in einer Hand zu ermöglichen, während die Steuerungen (16, 18, 20) auf dem Bedienfeld (10) mit der anderen Hand betätigt werden.

2. Landwirtschaftliches Fahrzeug nach Anspruch 1, **dadurch gekennzeichnet, dass** eine Dockstation in der Fahrzeugkabine vorgesehen ist, um das Fernbedienfeld (10) aufzunehmen, um es zu ermöglichen, dass das gleiche Bedienfeld (10) von einem Fahrer sowohl vom Inneren der Kabine aus als auch von einer entfernt angeordneten Stelle verwendbar ist.

3. Landwirtschaftliches Fahrzeug nach Anspruch 2, **dadurch gekennzeichnet, dass** die Funktionen des beweglichen Bedienfeldes (10) nicht auf einem festen Bedienfeld in der Fahrzeugkabine dupliziert sind.

4. Landwirtschaftliches Fahrzeug nach einem der vorhergehenden Ansprüche, **dadurch gekennzeichnet, dass** ein Totmann-Schalter (14) auf dem Fernbedienfeld (10) vorgesehen ist, der lediglich dann betätigt wird, wenn das Bedienfeld (10) sicher gehalten wird, wobei sich der Daumen des Fahrers in der Daumenöffnung (12) befindet.

5. Landwirtschaftliches Fahrzeug nach Anspruch 4, **dadurch gekennzeichnet, dass** der Totmann-Schalter (14) betreibbar ist, um entweder den Motor des landwirtschaftlichen Fahrzeuges abzuschalten, wenn er nicht durch die Hand eines Fahrers geschlossen wird, oder um die Funktion des Bedienfeldes (10) abzuschalten.

6. Landwirtschaftliches Fahrzeug nach einem der vorhergehenden Ansprüche, **dadurch gekennzeichnet, dass** das Bedienfeld (10) Einrichtungen umfasst, um festzustellen, ob der Fahrer Linkshänder oder Rechtshänder ist.

7. Landwirtschaftliches Fahrzeug nach Anspruch 6, **dadurch gekennzeichnet, dass** das Bedienfeld (10) einen Anzeigebildschirm umfasst, dessen Ausrichtung in Abhängigkeit davon geändert wird, ob der Fahrer Linkshänder oder Rechtshänder ist.

8. Landwirtschaftliches Fahrzeug nach einem der vorhergehenden Ansprüche, **dadurch gekennzeichnet, dass** das Fernbedienfeld (10) eine Steuerung für ein hydraulisches Hubwerk einschließt, das zur Einstellung der Position eines von dem Fahrzeug angetriebenen Arbeitsgerätes dient.

9. Landwirtschaftliches Fahrzeug nach einem der vorhergehenden Ansprüche, **dadurch gekennzeichnet, dass** es weiterhin Einrichtungen auf dem Fahrzeug zur Feststellung der Position des Fahrers und/oder von Tieren bezüglich des Fahrzeuges und Einrichtungen zum Abschalten des Fernbedienfeldes oder zum Abschalten des Fahrzeug-Motors umfasst, wenn sich der Fahrer zu nahe an das Fahrzeug bewegt.

10. Landwirtschaftliches Fahrzeug nach Anspruch 9, **dadurch gekennzeichnet, dass** die Einrichtungen zur Bestimmung der Position des Fahrers einen passiven Infrarot-Detektor, einen kapazitiven Sensor oder einen akustischen Sensor einschließen.

11. Landwirtschaftliches Fahrzeug nach Anspruch 9, **dadurch gekennzeichnet, dass** die Einrichtungen zur Feststellung der Position des Fahrers einen Transponder einschließen, der mit Sendern an Bord des Fahrzeuges zusammenwirkt, um die Bestimmung der Position des Fahrers durch Triangulation zu ermöglichen.

12. Landwirtschaftliches Fahrzeug nach einem der vorhergehenden Ansprüche, **dadurch gekennzeichnet, dass** das Fernbedienfeld (10) mit dem Fahrzeug unter Verwendung einer Funk- oder Infrarot-Kommunikationsstrecke kommuniziert.

## Revendications

1. Véhicule agricole possédant un panneau de commande à distance (10) qui est mobile par rapport au véhicule pour valider au moins l'une des fonctions du véhicule et/ou un outil associé à commander par un opérateur situé à distance du véhicule; et
**caractérisé en ce que** le panneau de commande à distance (10) a été formé pour ressembler à la palette d'un peintre, avec un trou de doigt (12) permettant de tenir fermement le panneau dans une main pendant que les commandes du panneau (16, 18, 20) sont actionnées avec l'autre main.

2. Véhicule agricole selon la revendication 1, **caractérisé en ce qu'**un poste d'amarrage est prévu dans la cabine du véhicule pour recevoir le panneau de commande à distance (10) de manière à permettre l'utilisation dudit panneau de commande (10) par un opérateur aussi bien depuis l'intérieur de la cabine qu'à distance.

3. Véhicule agricole selon la revendication 2, **caractérisé en ce que** les fonctions du panneau de commande mobile (10) ne sont pas dupliquées sur un panneau de commande fixe dans la cabine du véhicule.

4. Véhicule agricole selon l'une quelconque des revendications précédentes, **caractérisé en ce qu'**un interrupteur de contrôle de vigilance (14) est prévu sur le panneau de commande à distance (10) lequel est actionné uniquement lorsque le panneau de commande à distance (10) est maintenu fermement à l'aide du pouce de l'opérateur dans le trou de doigt (12).

5. Véhicule agricole selon la revendication 4, **caractérisé en ce que** l'interrupteur de contrôle de vigilance (14) est opérationnel soit pour couper le couper le moteur du véhicule agricole lorsqu'il n'est pas fermé par la main de l'opérateur, soit pour invalider la fonction du panneau (10).

6. Véhicule agricole selon l'une quelconque des revendications précédentes **caractérisé en ce que** le panneau (10) comprend des moyens pour définir si l'opérateur est droitier ou gaucher.

7. Véhicule agricole selon la revendication 6, **caractérisé en ce que** le panneau (10) comprend un écran d'affichage dont l'orientation est modifiée en fonction du fait que l'opérateur est droitier ou gaucher.

8. Véhicule agricole selon l'une quelconque des revendications précédentes **caractérisé en ce que** e panneau de commande à distance (10) comporte une commande pour un relevage hydraulique servant à ajuster la position d'un outil commandé par le véhicule.

9. Véhicule agricole selon l'une quelconque des revendications précédentes **caractérisé en ce qu'**il comprend en outre des moyens sur le véhicule pour déterminer la positon de l'opérateur et/ou du cheptel en relation avec le véhicule et des moyens pour invalider le panneau de commande à distance ou couper le moteur du véhicule si l'opérateur se rapproche trop du véhicule.

10. Véhicule agricole selon la revendication 9, **caractérisé en ce que** les moyens pour déterminer la position de l'opérateur comprennent un détecteur infrarouge passif, un capteur capacitif ou un capteur acoustique.

11. Véhicule agricole selon la revendication 9, **caractérisé en ce que** les moyens pour déterminer la position de l'opérateur comprennent un transpondeur coopérant avec de émetteurs embarqués sur le véhicule de manière à permettre de déterminer la position de l'opérateur par triangulation.

12. Véhicule agricole selon l'une quelconque des revendications précédentes **caractérisé en ce que** le panneau de commande à distance (10) communique avec le véhicule en utilisant une liaison de communication radio ou infrarouge.
